# EUROPÄISCHE PATENTSCHRIFT

(11) **EP 0 452 699 B1**
(45) Veröffentlichungstag und Bekanntmachung des Hinweises auf die Patenterteilung: **23.02.1994**
(21) Anmeldenummer: 91104515.1
(22) Anmeldetag: 22.03.1991
(51) Int. Cl.: F16K 27/08, G05D 23/13

(54) **Sanitäre Mischbatterie**
Sanitary mixing valve
Mitigeur sanitaire

(30) Priorität: 19.04.1990 DE 4012406
(43) Veröffentlichungstag der Anmeldung: 23.10.1991
(73) Patentinhaber: SCHEFFER-ARMATUREN FRANZ SCHEFFER oHG, D-58706 Menden (DE)
(72) Erfinder: Weidner, Eugen, W-5860 Iserlohn 1 (DE); Mische, Gerd, W-5860 Iserlohn 5 (DE)
(74) Vertreter: Fritz, Edmund Lothar, Dipl.-Chem.

(56) Entgegenhaltungen:
- FR-A- 2 483 036
- FR-A- 2 550 306
- US-A- 3 388 861
- US-A- 4 301 828

## Beschreibung

Die vorliegende Erfindung betrifft eine sanitäre Mischbatterie bestehend aus einem Batteriekörper mit einem Einlaßkanal für Kaltwasser, einem Einlaßkanal für Warmwasser und einem Auslaßkanal für Mischwasser, einer Einrichtung zur Einstellung der gewünschten Ausflußmenge an Mischwasser und einer Einrichtung für die Einstellung der Temperatur des ausfließenden Mischwassers. Sanitäre Mischbatterien dieser Art sind aus dem Stand der Technik bekannt (siehe z.B. FR-A-2 483 036) und werden insbesondere als sogenannte Thermostaten für Brausebatterien verwendet. An den Auslaßkanal für Mischwasser ist in diesem Fall ein Schlauch angeschlossen, der zu einer Handbrause führt. Über die vorgesehene Einstelleinrichtung kann eine vorgegebene dem Benutzer angenehme Temperatur des ausfließenden Mischwassers eingestellt werden, die grundsätzlich in der eingestellten Position verbleibt, so daß beim Öffnen des Mischventils sofort Mischwasser der gewünschten Temperatur aus dem Auslaßkanal fließt.

Die Aufgabe der vorliegenden Erfindung besteht darin, eine sanitäre Mischbatterie der Eingangs genannten Art zur Verfügung zu stellen, die eine einfache, rationelle und kostengünstige Herstellung ermöglicht.

Die Lösung dieser Aufgabe liefert eine sanitäre Mischbatterie der genannten Art mit den kennzeichnenden Merkmalen des Anspruchs 1. Die in den abhängigen Ansprüchen genannten Merkmale betreffen bevorzugte Weiterbildungen der erfindungsgemäßen Aufgabenlösung.

Die erfindungsgemäße sanitäre Mischbatterie besteht aus einem als Gußteil ausgebildeten Batteriekörper, innerhalb dessen ein Kanal für das eintretende Warmwasser, ein Kanal für das eintretende Kaltwasser sowie eine Mischkammer, die mit dem Auslaßkanal für Mischwasser in Verbindung steht, angeordnet sind. Der Batteriekörper nimmt außerdem die erforderlichen Steuerelemente für die Einstellung der Menge des ausfließenden Mischwassers und die Mischung des eintretenden Kaltwassers und Warmwassers im gewünschten Verhältnis zur Erzielung der entsprechenden Mischwassertemperatur auf. Erfindungsgemäß kann dieser Batteriekörper aus Guß außenseitig im Rohzustand verbleiben, da er durch zwei im wesentlichen halbzylinderförmige Schalen aus Kunststoff, die ihn umfangseitig umgeben, verkleidet wird. Die Herstellung dieser Kunststofformteile ist kostengünstiger als die bisher übliche Bearbeitung des Batteriekörpers in mehreren Bearbeitungsstufen, wie z. B. Schleifen, Polieren, Verchromen, Spritzen in der gewünschten Farbe etc.. Stirnseitig ist der Blick auf den Batteriekörper durch zwei ebenfalls als Kunststofformteile ausgebildete teilkugelschalenförmige Kappen verwehrt, die gleichzeitig als Bedienungselemente für die Steuerung der Menge bzw. Temperatur des ausfließenden Mischwassers dienen. Diese Kappen können so dimensioniert sein, daß der Durchmesser der Teilkugel etwa dem Durchmesser des aus den beiden halbzylinderförmigen Schalen gebildeten Zylinders entspricht, so daß sich ein absatzloser Übergang ergibt, was der Mischbatterie insgesamt ein vorteilhaftes Äußeres verleiht.

Die beiden halbzylinderförmigen Schalen weisen vorzugsweise jeweils stirnseitig Ringstege auf, auf deren Ringfläche innenseitig vorzugsweise schwach konisch ausgebildete Halteringe aufschiebbar sind, die zusätzlich zu der Rastverbindung zwischen beiden Halbschalen für eine Zentrierung sorgen. Weitere Vorteile der vorliegenden Erfindung werden aus der nachfolgenden Detailbeschreibung einer bevorzugten Ausführungsform deutlich.

Im folgenden wird die Erfindung anhand eines Ausführungsbeispiels unter Bezugnahme auf die beiliegenden Zeichnungen näher beschrieben. Dabei zeigen
- Fig. 1: die Draufsicht auf den Thermostaten gemäß der Erfindung;
- Fig. 2: die Seitenansicht des Thermostaten gemäß Fig. 1,
- Fig. 3: einen Längsschnitt durch den Thermostaten;
- Fig. 4: einen Horizontalschnitt durch den Thermostaten;
- Fig. 5: den Fig. 3 entsprechenden Querschnitt;
- Fig. 6: den Fig. 4 entsprechenden Querschnitt;
- Fig. 7: eine Seitenansicht der Unterschale;
- Fig. 8: die Fig. 7 entsprechende Draufsicht;
- Fig. 9: einen Schnitt entlang der Linie A-B-C-D in Fig. 8;
- Fig. 10: eine Ansicht in Richtung des Pfeils X von Fig. 8;
- Fig. 11: einen vergrößerten Ausschnitt XI von Fig. 9 im Maßstab 10:1;
- Fig. 12: eine vergrößerte Ansicht des Rastelements in Fig. 8 im Maßstab 10:1;
- Fig. 13: eine Ansicht auf die Deckschale von unten;
- Fig. 14: einen Schnitt entlang der Linie A-A von Fig. 13;
- Fig. 15: einen Schnitt entlang der Linie D-D von Fig. 13;
- Fig. 16: einen Längsschnitt durch die Deckschale;
- Fig. 17: einen vergrößerten Schnitt entlang der Linie F-F von Fig. 16 im Maßstab 5:1;
- Fig. 18: einen Detailausschnitt X von Fig. 14 im Maßstab 10:1;
- Fig. 19: einen Schnitt entlang der Linie B-B von Fig. 13;
- Fig. 20: einen Schnitt entlang der Linie C-C von Fig. 13;
- Fig. 21: eine Schnittdarstellung der Verrastung von Unterschale und Deckschale in vergrößertem Maßstab.

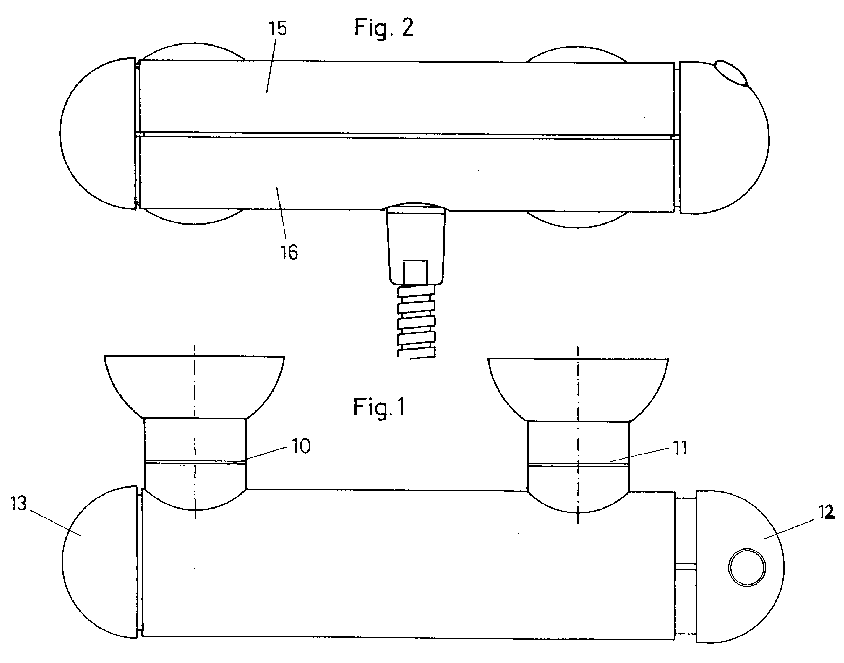

Es wird zunächst auf Fig. 1 Bezug genommen. Die Darstellung zeigt eine Draufsicht auf den Thermostaten, der in bekannter Weise zwei Wandanschlußleitungen 10 und 11 für die Warmwasser- bzw. Kaltwasserzufuhr hat. An einer Stirnseite ist eine Einstelleinrichtung 12 für die Einstellung der gewünschten Wassertemperatur vorgesehen und an der gegenüberliegenden Stirnseite befindet sich ein Einstellventil mit Einstelleinrichtung 13 für die Wahl der gewünschten Wasserdurchflußmenge.

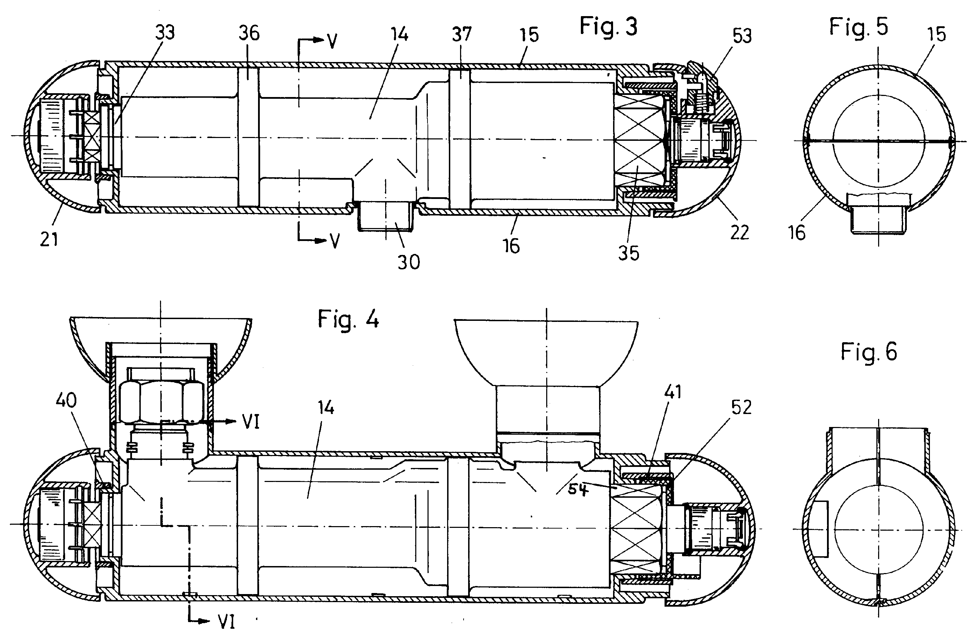

Wie sich aus den Figuren 3 und 4 ergibt, ist der Batteriekörper 14 ein Gußteil, das durch zwei als Kunststofformteile gebildete halbzylindrische Schalen, nämlich eine Deckschale 15 und eine Unterschale 16, verkleidet ist. An der Unterseite des Batteriekörpers befindet sich der Auslaufkanal 30 für Mischwasser.

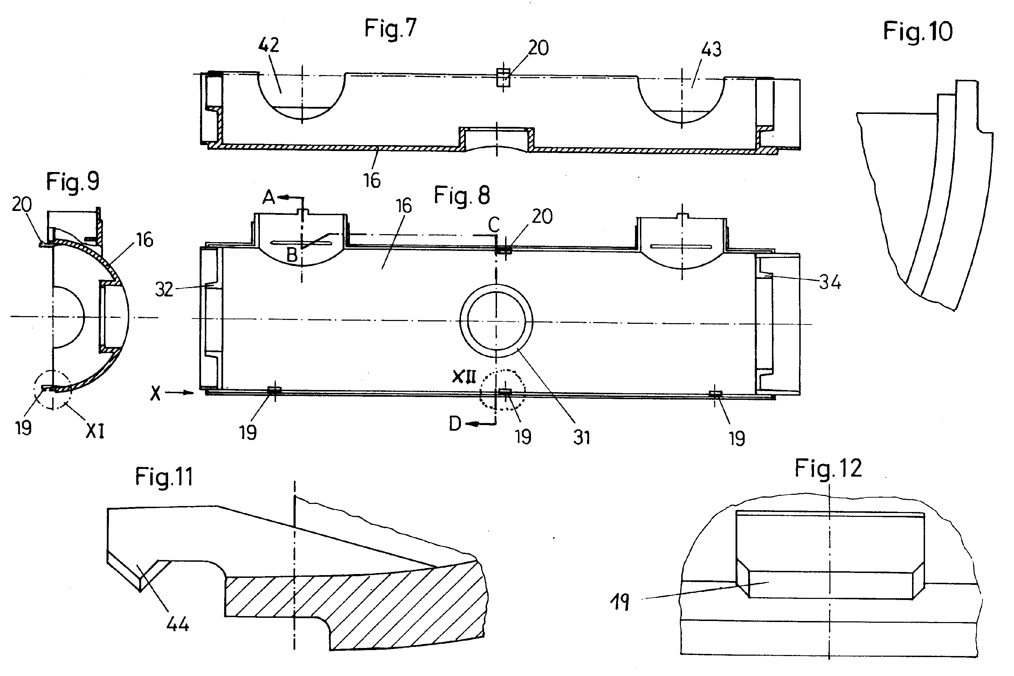

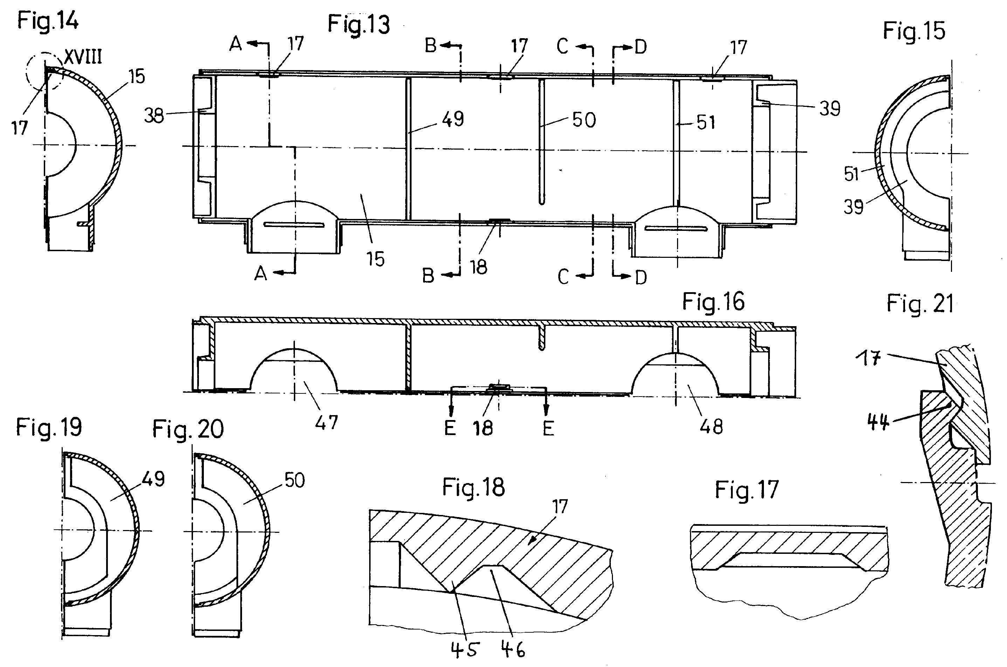

Wie aus Fig. 8 ersichtlich ist, weist die Unterschale 16 eine dem Auslaufkanal entsprechende kreisrunde Ausnehmung 31 auf. Endseitig ist an der Unterschale ein Ringsteg 32 angeformt, der der Aufnahme eines im Durchmesser entsprechenden Abschnitts 33 des Batteriekörpers 14 dient. In gleicher Weise ist an der gegenüberliegenden Seite der Unterschale endseitig ein im Durchmesser etwas breiterer Ringsteg 34 angeformt, der den Abschnitt 35 des Batteriekörpers aufnimmt. Der Batteriekörper 14 weist darüberhinaus zwei mit Abstand voneinander angeordnete Bünde 36, 37 auf, an denen jeweils Unterschale 16 und Deckschale 15 anliegen. Die Deckschale 15 weist jeweils endseitig Ringstege 38, 39 entsprechenden Durchmessers wie die Unterschale auf (siehe Fig. 13).

Die Bedienung des Einstellventils für die gewünschte Wassermenge erfolgt über die stirnseitige teilkugelschalenförmige Kappe 21, die mit dem Regelorgan des Ventils drehfest verbunden ist. Es ist außerdem ein Haltering 40 vorgesehen, der die Ringstege 32 der Unterschale und 38 der Deckschale übergreift (siehe Fig. 4). In gleicher Weise ist auf der gegenüberliegenden Stirnseite eine teilkugelschalenförmige Kappe 22 vorgesehen, die drehfest auf ein Regelorgan des Thermostatventils aufgesetzt ist. Es ist wiederum ein Haltering 41 vorgesehen, der die Ringstege 34 der Unterschale bzw. 39 der Deckschale umschließt. Es ist ein weiterer Ring 52 vorgesehen, der auf einen endseitigen Achtkant 54 des Batteriekörpers 14 aufgeschoben ist und an dem ein Absatz gebildet ist, der als Anschlag für die Begrenzung der Drehbewegung der halbkugelförmigen Kunststoffkappe 22 dient. In die Kappe 22 radial eingelassen, ist ein Druckknopf 53, der in seiner Grundstellung eine Drehung der Kappe 22 nur soweit ermöglicht, bis ein maximaler Temperaturwert, z. B. 38° C erreicht ist. Erst bei Eindrücken dieses Druckknopfs 53 kann die Temperatur des auslaufenden Mischwassers über diesen maximalen Wert hinaus geregelt werden.

Im folgenden wird auf die Figuren 7 bis 12 Bezug genommen. Die Unterschale 16 weist jeweils halbkreisförmige Ausnehmungen 42, 43 auf für den Durchgang der Zufuhrkanäle für Warmwasser und Kaltwasser. Die Unterschale weist an einer Seite drei Rastelemente 19 auf, denen drei Rastelemente 17 der Oberschale (Fig. 13) entsprechen. An der gegenüberliegenden Seite der Unterschale ist neben den Ausnehmungen 42, 43 ebenfalls ein Rastelement 20 angeformt. Dem Rastelemente 20 der Unterschale 16 entspricht ein Rastelement 18 der Oberschale 15. Wie aus den Figuren 9 und 11 ersichtlich ist, sind an den Rastelementen 19 Nasen 44 geformt. Wie aus den Figuren 14 und 18 hervorgeht, weisen die Rastelemente 17 der Deckschale 15 ebenfalls Rastnasen 45 auf, sowie Einsprünge 46, in die die Rastnasen 44 der Unterschale einrasten (siehe auch Fig. 21).

Wie aus Fig. 16 ersichtlich ist, weist die Deckschale 15 ebenso wie die Unterschale halbkreisförmige Ausnehmungen 47, 48 für den Durchgang der Zufuhrkanäle für Warmwasser und Kaltwasser auf. An der Deckschale sind außerdem zur Aussteifung ringförmige radiale Stege 49, 50, 51 angeformt.

## Patentansprüche

1. Sanitäre Mischbatterie bestehend aus einem Batteriekörper (14) mit einem Einlaßkanal (11) für Kaltwasser, einem Einlaßkanal (10) für Warmwasser und einem Auslaßkanal (30) für Mischwasser, einer Einrichtung zur Einstellung der gewünschten Ausflußmenge an Mischwasser und einer Einrichtung für die Einstellung der Temperatur des ausfließenden Mischwassers, dadurch gekennzeichnet, daß der Batteriekörper (14) als Gußteil ausgebildet ist, das umfangseitig durch zwei im wesentlichen halbzylinderförmige Schalen (15, 16) aus Kunststoff verkleidet ist, an die sich jeweils stirnseitig im Umriß etwa teilkugelschalenförmige Kappen (21, 22) aus Kunststoff anschließen, die um eine die Verlängerung der Längsachse des Batteriekörpers bildende Achse drehbar befestigt sind und mittels derer jeweils die Bedienung der Einstelleinrichtung für die gewünschte Menge und Temperatur des Mischwassers erfolgt.

2. Sanitäre Mischbatterie nach Anspruch 1, dadurch gekennzeichnet, daß als halbzylinderförmige Schalen eine Unterschale (16) und eine Deckschale (15) vorgesehen sind, die jeweils über Rastelemente (17, 18, 19, 20) untereinander verbindbar sind.

3. Sanitäre Mischbatterie nach Anspruch 2, dadurch gekennzeichnet, daß im montierten Zustand Deckschale (15) und Unterschale (16) umfangseitig an wenigstens einem Bund (36, 37), der am Batteriekörper (14) angeformt ist, anliegen.

4. Sanitäre Mischbatterie nach einem der Ansprüche 2 bis 3, dadurch gekennzeichnet, daß die Unterschale (16) im mittigen Bereich eine etwa kreisförmige Ausnehmung (31) für den Durchgang des mit dem Batteriekörper (14) verbundenen Auslaufkanals (30) aufweist.

5. Sanitäre Mischbatterie nach einem der Ansprüche 2 bis 4, dadurch gekennzeichnet, daß die Deckschale (15) an einer Längsseite im unteren Bereich zwei etwa halbkreisförmige Ausnehmungen (47, 48) aufweist für den Durchgang der Einlaßkanäle für Kaltwasser und Warmwasser.

6. Sanitäre Mischbatterie nach einem der Ansprüche 2 bis 4, dadurch gekennzeichnet, daß die Unterschale (16) an einer Längsseite im oberen Bereich zwei etwa halbkreisförmige Ausnehmungen (42, 43) für den Durchgang der Einlaßkanäle für Kaltwasser und Warmwasser aufweist.

7. Sanitäre Mischbatterie nach einem der Ansprüche 2 bis 6, dadurch gekennzeichnet, daß an der Unterschale (16) stirnseitig jeweils Ringstege (32, 34) angeformt sind.

8. Sanitäre Mischbatterie nach einem der Ansprüche 2 bis 7, dadurch gekennzeichnet, daß an der Deckschale (15) stirnseitig jeweils Ringstege (38, 39) angeformt sind.

9. Sanitäre Mischbatterie nach einem der Ansprüche 2 bis 8, dadurch gekennzeichnet, daß an der Deckschale ein oder mehrere radiale Stege (49, 50, 51) angeformt sind.

10. Sanitäre Mischbatterie nach einem der Ansprüche 2 bis 9, dadurch gekennzeichnet, daß Halteringe (40, 41) vorgesehen sind, die die Ringstege (32, 34 bzw. 38, 39) von Unterschale (16) bzw. Deckschale (15) übergreifen und an diesen außen umfangseitig anliegen.

11. Sanitäre Mischbatterie nach einem der Ansprüche 1 bis 10, dadurch gekennzeichnet, daß ein an der Einstelleinrichtung für die Temperatur des Mischwassers festlegbarer Anschlagring (52) vorgesehen ist, der den Drehweg der teilkugelschalenförmigen Kappe (22) begrenzt.

## Claims

1. Sanitary mixing valve consisting of a valve body (14) with an inlet channel (11) for cold water, an inlet channel (10) for hot water and an outlet channel (30) for mixed water, a device for adjusting the desired amount of mixed water flowing out and a device for adjusting the temperature of mixed water flowing out, characterised in that the valve body (14) is formed as a casting which is lined at its circumference with two substantially semicylindrical shells (15, 16) of plastic material which are joined at the face sides by caps (21, 22) of plastic material having the contour of a part of a spherical cup and being mounted so as to be rotatable about an axis forming the elongation of the longitudinal axis of the valve body and by means of which the operation of the adjustment device for the desired amount and the temperature of the mixed water is effected.

2. Sanitary mixing valve as claimed in claim 1, characterised in that a lower shell (16) and a covering shell (15) are provided as semicylindrical shells which are connectable to one another by means of locking elements (17, 18, 19, 20).

3. Sanitary mixing valve as claimed in claim 2, characterised in that the covering shell (15) and the lower shell (16) rest, in the assembled condition, at their circumference against at least one collar (36, 37) integrally formed with the valve body (14).

4. Sanitary mixing valve as claimed in any one of claims 2 to 3, characterised in that the lower shell (16) comprises, in its central region, an approximately circular recess (31) for the passage of the outlet channel (30) connected to the valve body (14).

5. Sanitary mixing valve as claimed in any one of claims 2 to 4, characterised in that the covering shell (15) comprises at one longitudinal side in the lower region thereof two approximately semicircular recesses (47, 48) for the passage of the inlet channels for cold water and hot water.

6. Sanitary mixing valve as claimed in any one of claims 2 to 4, characterised in that the lower shell (16) comprises at one longitudinal side in the upper region thereof two approximately semicircular recesses (42, 43) for the passage of the inlet channels for cold water and hot water.

7. Sanitary mixing valve as claimed in any one of claims 2 to 6, characterised in that annular webs (32, 34) are integrally formed with each face side of the lower shell (16).

8. Sanitary mixing valve as claimed in any one of claims 2 to 7, characterised in that annular webs (38, 39) are integrally formed with each face side of the covering shell (15).

9. Sanitary mixing valve as claimed in any one of claims 2 to 8, characterised in that one or more radial webs (49, 50, 51) are integrally formed with the covering shell.

10. Sanitary mixing valve as claimed in any one of claims 2 to 9, characterised in that supporting rings (40, 41) are provided which overlap the annular webs (32, 34 and 38, 39, resp.) of the lower shell (16) and the covering shell (15), respectively, and rest against these outwardly at the circumference.

11. Sanitary mixing valve as claimed in any one of claims 1 to 10, characterised in that a stop ring (52) limiting the rotatory travel of the cap (22), having the shape of a part of a spherical cup, is provided which is fastenable to the adjusting device for the temperature of the mixed water.

## Revendications

1. Mitigeur sanitaire comprenant un corps (14) avec un canal d'admission (11) pour l'eau froide, un canal d'admission (10) pour l'eau chaude et un canal d'échappement (30) pour l'eau mixte, un dispositif pour régler la quantité d'émission désirée de l'eau mixte et un dispositif pour régler la temperature de l'eau mixte s'écoulée, caractérisé en ce que le corps (14) du mitigeur est formé comme pièce de fonte, revêtue à la circonférence par deux enveloppes (15, 16) demi-cylindriques en matière plastique, qui sont jointes à leurs côtés frontaux aux capuchons (21, 22) en matière plastique qui ont le contour d'une part d'une cuvette et qui sont attachés rotativement sur un axe représentant l'allongement de l'axe longitudinal du corps du mitigeur, et avec lesquelles la manipulation des dispositifs de réglage pour la quantité désirée et la temperature de l'eau mixte est effectuée.

2. Mitigeur sanitaire selon la revendication 1, caractérisé en ce qu'une enveloppe inférieure (16) et une enveloppe de recouvrement (15) sont prévues comme enveloppes demi-cylindriques, qui peuvent être assemblées entre eux par des éléments d'arrêt (17, 18, 19, 20).

3. Mitigeur sanitaire selon la revendication 2, caractérisé en ce que l'enveloppe de recouvrement (15) et l'enveloppe inférieure (16) joignent, dans la condition assemblée, avec leur circonférence un collet (36, 37) moulé au corps (14) du mitigeur.

4. Mitigeur sanitaire selon une des revendications 2 à 3, caractérisé en ce que l'enveloppe inférieure (16) présente dans la région centrale un évidement (31) à peu près circulaire pour le passage du canal d'échappement (30) associé avec le corps (14) du mitigeur.

5. Mitigeur sanitaire selon une des revendications 2 à 4, caractérisé en ce que l'enveloppe de recouvrement (15) présente, à un côté longitudinal, dans la région inférieure deux évidements (47, 48) à peu près demi-circulaire pour le passage des canaux d'admission pour l'eau froide et l'eau chaude.

6. Mitigeur sanitaire selon une des revendications 2 à 4, caractérisé en ce que l'enveloppe inférieure (16) présente, à un côté longitudinal, dans la région supérieure, deux évidements (42, 43) à peu près demi-circulaire pour le passage des canaux d'admission pour l'eau froide et l'eau chaude.

7. Mitigeur sanitaire selon une des revendications 2 à 6, caractérisé en ce que des entretoises annulaires (32, 34) sont formées à la face frontale de l'enveloppe inférieure (16).

8. Mitigeur sanitaire selon une des revendications 2 à 7, caractérisé en ce que des entretoises annulaires (38, 39) sont formées à la face frontale de l'enveloppe de recouvrement (15).

9. Mitigeur sanitaire selon une des revendications 2 à 8, caractérisé en ce qu'un ou plusieurs entretoises radiales (49, 50, 51) sont formées à l'enveloppe de recouvrement.

10. Mitigeur sanitaire selon une des revendications 2 à 9, caractérisé en ce que des bagues de support (40, 41) sont prévues qui recouvrent les entretoises annulaires (32, 34 et 38, 39, respectivement) de l'enveloppe inférieure (16) et de l'enveloppe de recouvrement (15), respectivement, et qui joignent la circonférence extérieure de lesquelles.

11. Mitigeur sanitaire selon une des revendications 1 à 10, caractérisé en ce qu'une bague d'arrêt (52) est prévue qui limite le mouvement rotatif du capuchon (22) en forme d'une part d'une cuvette et qui peut être arrêter au dispositif pour régler la temperature de l'eau mixte.
